(19) Europäisches Patentamt European Patent Office Office européen des brevets

(11) **EP 3 798 604 B1**

(12) **EUROPEAN PATENT SPECIFICATION**

(45) Date of publication and mention
of the grant of the patent:
**07.06.2023   Bulletin 2023/23**

(21) Application number: **19199270.0**

(22) Date of filing: **24.09.2019**

(51) International Patent Classification (IPC):
*G01M 17/02* $^{(2006.01)}$      *G01M 1/04* $^{(2006.01)}$

(52) Cooperative Patent Classification (CPC):
**G01M 17/021; G01M 1/045; G01M 17/022**

(54) **CHUCKING APPARATUS**

EINSPANNVORRICHTUNG

APPAREIL DE TOURNAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.03.2021   Bulletin 2021/13**

(73) Proprietor: **Euro-Fitting Management NV
1930 Zaventem (BE)**

(72) Inventors:
• **KOEHNE, Stephan
1930 Zaventem (BE)**

• **BERGEMANN, Florian
1930 Zaventem (BE)**

(74) Representative: **Brantsandpatents bv
Pauline Van Pottelsberghelaan 24
9051 Ghent (BE)**

(56) References cited:
**EP-A1- 3 418 708        US-A- 5 719 331
US-A1- 2018 128 704**

**Description**

**TECHNICAL FIELD**

The present invention relates to a chucking apparatus designed for chucking a TWA (tire wheel assembly) in a TWA uniformity machine in a fast manner in a first aspect. In a second aspect, the present invention introduces a method for performing a TWA uniformity measurement.

**BACKGROUND**

Tire uniformity testing machines commonly include an upper rim, a vertically-movable lower rim, and a conveyor to bring a tire between the upper and lower rims. A mechanism is provided to raise the lower rim through an opening in the conveyor, carrying a tire with it, to the upper rim where the tire is inflated. The lower rim carries a center cone that is engagable with a center recess in the upper rim, the cone precisely positioning the upper rim with respect to the lower rim so that the separation between the two is at the desired bead width for the tire being tested. A motor is connected to the upper rim to rotate it at a predetermined test speed. A load wheel or road wheel, rotatable on an axis parallel to the axis of the tire, is movable into engagement with the tire tread so as to load the tire as it rotates in a manner simulating a road condition.

A hydraulic actuator is connected to the lower rim to raise and lower it. This actuator must be capable of applying a force sufficient to overcome the separation force of tens of thousands of pounds acting on the rims when the tire is inflated. The force applied by the actuator must also be sufficiently great to hold the cone against the recess of the upper rim with sufficient pressure to driveably couple the upper and lower rims so that the rotational force applied to the upper rim is transmitted to the lower rim through the center cone rather than through the tire substantially without slip which might otherwise distort the tire and possibly affect test results.

EP 3 418 708 discloses a wheel clamping system for reversibly clamping a motor vehicle wheel on a wheel balancer, a wheel balancer having a wheel clamping system, and a method for reversibly clamping a motor vehicle wheel on a wheel balancer using a wheel clamping system. This document is showing the features of the preamble of claim 1.

US 2018/128704 discloses a dynamic balancer includes a support frame with a frame plate that has a spindle opening through which a spindle assembly with a rotatable spindle shaft is received. A sensor plate is coupled to at least the support frame, and at least one force sensor is coupled between the sensor plate and the spindle assembly to detect force variations therebetween as the rotatable spindle shaft rotates.

Many existing technics have considered the adjustable bead width spacing. US5719331 A discloses an apparatus and method for quickly and accurately chucking a tire in a tire uniformity a machine prior to testing in order to accommodate tires of differing bead width spacing.

However, similar technics are suitable for a separate tire and a wheel, wherein it needs a tire inflating step before assemble the tire on the tire uniformity machine. In modern technics, the tire and the wheel are often already assembled as a tire wheel assembly (TWA) before delivered to the uniformity test. It omits the step of inflating the tire on the site of the tire uniformity machine and thus increases the efficiency. Since such TWAs come in various width due to manufacturing, the upper rim and lower rim still need to adjust the space in between.

One problem of a TWA uniformity machine is the rotation components during a uniformity measurement. In a conventional tire uniformity machine, the upper rim, the lower rim, the spindle and optionally some part of the supporting base of the upper rim and the lower rim, are all rotating together with the tire. The heavier the rotation components are, the more energy is used to drive these rotation components. Since the goal is checking the TWA uniformity, it is necessary to reduce unnecessary components to participate in the rotating procedure. Such that it saves more energy to perform a uniformity measurement.

In a modern industrial working line, TWA uniformity measurements are performed to a pack of TWA within a limited amount of time. In order to achieve a better efficiency, a number of actions are taken to shorten the measurement time for a single TWA, comprising: a faster delivering system to position a TWA at desired location, an optimized measurement course, a fast transporting system that collects the TWAs after measurement. More effort could be paid at the assembling process, i.e. the clamping and unclamping process. Such that a shorter assembling time could contribute to the efficiency of a TWA measurement.

In addition, due to various reasons, the central part of the wheel nowadays is often produced with a sunken structure. The periphery of the wheel is somehow thicker than the central part. In a TWA uniformity machine, the upper and lower rim clamp the TWA on its periphery, i.e. the periphery of the wheel. As a result, the central part of the wheel, is not in contact with any surface, especially the central part of the lower surface of the TWA. In this manner, there might be a lateral force created in the central part of the wheel, especially at the lower surface due to gravity. Thus it is desired to have a better control of the central part of the wheel, especially at the lower surface.

The current challenge for designing a chucking apparatus for chucking a TWA in a TWA uniformity machine is that i) it shall adjust the space between the upper and lower rim based on the width of the TWA; ii) it shall reduce the rotation components to save rotation energy; iii) it shall provide a fast clamping and unclamping means to save the assembling time; iv) it shall provide a control to the central part of the TWA, especially at its lower surface.

There is a need to design a clamping assembly to solve at least some of above mentioned problems or challenges.

## SUMMARY OF THE INVENTION

In a first aspect, the present invention provides a chucking apparatus designed for chucking a TWA (tire wheel assembly) in a TWA uniformity machine, said chucking apparatus comprising:

- a lower rim apparatus;
- an upper rim apparatus, said upper rim apparatus comprising a central axis and a clamping shaft along said central axis, said upper rim apparatus moveable towards and away from said lower rim apparatus along the central axis;
- means in communication with said upper rim apparatus for controlling the movement towards and away from said lower rim apparatus;
- a sensing unit mounted under said lower rim apparatus;

said lower rim apparatus comprising:

- a frustoconical portion, said frustoconical portion comprising a central opening corresponding to said clamping shaft along the central axis;
- a clamping unit suitable for receiving the end tip of said clamping shaft;

characterized in that said frustoconical portion is movable towards and away from said upper rim apparatus along the central axis.

In a second aspect, the present invention provides a method for performing a TWA uniformity test, comprising the following steps:

- assemble a TWA on a TWA uniformity machine according to any of the claim 1 to 10;
- set the standing-by drum barrel shaft in contact with the surface of the TWA;
- control the rotation motor coupled to the chucking apparatus in respect of a measuring course; wherein the TWA rotates driven by the rotation motor, and correspondingly, the drum barrel shaft rotates by the friction at the surface in contact with the TWA;
- stop the rotation motor and collect data from the sensing unit.

## DESCRIPTION OF FIGURES

**Figure 1** shows schematically a perspective view of the chucking apparatus, according to an embodiment of the present application.

**Figure 2** shows schematically a perspective view of a TWA measurement, according to an embodiment of the present application.

**Figure 3** shows schematically a perspective view of a TWA measurement, according to another embodiment of the present application.

## DETAILED DESCRIPTION OF THE INVENTION

Unless defined otherwise, all technical and scientific terms used herein have the same meaning as commonly understood by one of ordinary skill in the art to which this application belongs.

As used herein, the singular forms "a", "an", and "the" include both singular and plural referents unless the context clearly dictates otherwise. The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints. When a numerical value is used, said value encompasses the exact numerical value as such, as well as all numerical values that would be rounded up to said exact numerical value according to standard mathematical and/or statistical regulations.

Similarly, when a period of time is indicated using a numerical value such as "about 30 minutes", said value encompasses the exact time indicated as well as periods that deviate therefrom by e.g. less than one minute, half a minute, or 1, 2, 3, 4 or 5 minutes. Analogously, the term "about 30 seconds" encompasses about 20, 25 seconds to about 35, 40 seconds, as well as any time in between.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments.

By means of further guidance, definitions for the terms used in the description are included to better appreciate the teachings of the present application.

Upper rim apparatus (2)

In a preferred embodiment, the chucking apparatus (1) comprising: an upper rim apparatus (2), said upper rim apparatus comprising a central axis (11) and a clamping shaft (22) along said central axis (11).

In a preferred embodiment, the upper rim apparatus (2) is supported by an upper supporting portion (not shown in the figure). The clamping shaft (22) may be integrated in the supporting portion at the junction (23). The clamping shaft (22) may also be supported by another means. The upper rim apparatus (2) further comprises a cylinder body (21), wherein the surface (26) of the body designed for facing the TWA is suitable to clamp on the surface of the TWA. Said surface (26) may or may not be a flat surface. Said upper rim apparatus (2) moveable along the central axis (11) by a means, said means may be in communication with the supporting portion. Said means could also be a separate means from the upper supporting portion.

In a preferred embodiment, the clamping shaft (22) comprises a cylinder body, an end tip (24) and a narrowed neck (25) between the cylinder body and the end tip (24). The diameter of the clamping shaft (22), more specifically, the diameter of the cylinder body is smaller than the diameter of the central opening of the desired TWA, such that the clamping shaft (22) could pass through the central opening of the TWA. The end tip (24) may or may not be a conical end tip (24), and preferably a frustoconical end tip (24). The frustoconical end tip (24) is suitable for an easy access to the corresponding part in the lower rim apparatus to receive the clamping shaft (22). The length of the clamping shaft (22) determines the width of the desired TWA for measurement. Thus for different types of TWA, a different clamping shaft (22) is desired.

Lower rim apparatus (3)

In a preferred embodiment, the chucking apparatus (1) further comprises a lower rim apparatus (3), said lower rim apparatus comprising a frustoconical portion (31), a clamping unit (32) and an elastic element (33).

In a preferred embodiment, the lower rim apparatus (3) further comprises a cylinder body (34), wherein the cylinder body (34) may or may not be T-shaped in cross section view. The diameter of said cylinder body (34) may or may not be homogeneous. The surface (36) of the body designed for facing the TWA is suitable to clamp the surface of the TWA. Said surface (36) may or may not be flat. The lower rim apparatus is supported by a lower supporting portion, wherein at least one pair of bearing (35) is mounted between the lower apparatus (3) and the lower supporting portion at any position suitable. The cylinder body (34) is linked with a rotation axle (37) at the lower supporting portion.

In a preferred embodiment, the sensing unit is mounted on the lower supporting portion to monitor the rotation performance of the TWA. The sensing unit comprises a plurality of sensor. Said sensors comprises force sensors. A force sensor may comprises three force components (channels): $F_x$, $F_y$, $F_z$ or may not. A force sensor could be provided by any brand and any mode as long as it is suitable for the requirement of a measurement. Features of a force sensor comprising the force range shall be aligned with the specific requirement of the desired TWA and measurement procedure.

In a preferred embodiment, the frustoconical portion (31) is supported by said cylinder body (34) in respect of the central axis (11). Said frustoconical portion (31) comprises a central opening, which is aligned with the central axis (11). Said central opening is suitable for the clamping shaft (22) to pass through. Said frustoconical portion (31) further comprises a cylinder body and a frustoconical end. The diameter of the cylinder body is bigger than the diameter of the central opening of the TWA, but smaller than the diameter of the cylinder body (34), at least smaller than the biggest diameter of the cylinder body (34). The surface of the frustoconical portion (31), which is facing the TWA, may or may not flat. Said surface could be any surface that is suitable to be in contact with the central part of the TWA at its lower surface. The frustoconical portion (31) further comprises at least one protrusion (38) orthogonal to the central axis on its cylinder surface, more specifically, on the surface of the cylinder body of the frustoconical portion (31). Correspondingly, the cylinder body (34) comprises at least one cavity suitable to receive said protrusion (38). The combination of the protrusion (38) and the cavity allows the frustoconical portion (31) to move along the central axis (11), but prevents a relative movement between the frustoconical portion (31) and the cylinder body (34).

In a preferred embodiment, the clamping unit (32) comprises a housing and a locking means, wherein the housing is suitable to receive the end tip (24) of the clamping shaft (22). The narrowed neck (25) of the clamping shaft (22) is suitable to receive the locking means. Said locking means may or may not be a plurality of bullets.

In a preferred embodiment, said elastic element (33) may be between the frustoconical portion (31) and the clamping unit (32) or may not. Said elastic element (33) may be below the frustoconical portion (31) and the clamping unit (32). Said elastic element (33) may be in any position suitable for the chucking apparatus (1). The elastic element (33) allows the frustoconical portion (31) to move towards and away from the upper rim apparatus. Eventually, it allows the frustoconical portion (31) to always be in contact with the lower surface of the TWA due to its elasticity. Such that certain benefits could be obtained, comprising, reducing the lateral force. The elastic element (33) may or may not be metallic. The elastic element (33) may or may not be rubber. The elastic element (33) may be any suitable material for the function described above. In a preferred embodiment, the elastic element (33) is a spring, more preferably a disc-spring 0MW2362-0060-30M. In a preferred embodiment, wherein the elastic element (33) isbetween the frustoconical portion (31) and the clamping unit (32), the elastic element (33) further comprises a central opening that allows the clamping shaft (22) to pass through.

Assemble procedure

In a preferred embodiment, a TWA is delivered to the position of the chucking apparatus (1), more specifically, the central opening of the TWA is aligned with the central axis (11) of said chucking apparatus (1). The upper rim apparatus (2) moves downwards to the TWA and the lower rim apparatus. The clamping shaft (22) passes through the central opening of the TWA first, then the central opening of the frustoconical portion (31) and optionally the central opening of the elastic element (33) (if the elastic element (33) is between the frustoconical portion (31) and the clamping unit (32)), and finally arrives at the clamping unit (32). More specifically, the end tip (24) arrives the housing in the clamping unit (32) and the narrowed neck (25) is at a corresponding position with the locking means in the clamping unit (32). In a preferred embodiment, the locking means is a plurality of bullets. The bullets apply a force towards the central axis (11) at the narrowed neck (25) and thus forms a rigid connection between the clamping unit (32) and the clamping shaft (22). This locking procedure shall be easy and fast, thus it could save the time for clamping.

In a preferred embodiment, the upper rim apparatus (2) and the lower rim apparatus (3) clamps the TWA when assembling. More specifically, the surface (26) of the upper rim apparatus (2) and the surface (36) of the lower rim apparatus (3) clamp the TWA on the periphery of its surfaces. A force is applied from the upper rim apparatus (2) or from the lower rim apparatus (3) on the TWA thus it is tightly clamped. In modern manufacturing, the surfaces of the TWA that are being clamped is usually not flat. A sunken structure at the central part is expected. Thus there is a space between the central opening of the TWA and the surface (36) of the lower rim apparatus (3) that clamps the TWA. Said frustoconical portion (31) fulfills the space. Due to the elastic element (33), the frustoconical portion (31) could adjust based on the distance of between the surface (36) of the lower rim apparatus (3) and the central opening of the TWA along the central axis (11). Due to the elastic element (33), the frustoconical portion (31) could always be in contact with the lower surface of the TWA around the central opening with a force upwards. This adjusting procedure shall be done automatically, thus it could provide extra control at the central part of the TWA and meanwhile saves time to do so.

To disassemble the TWA from the chucking apparatus (1) after the measurement in a preferred embodiment, the locking means in the clamping unit (32) cancels the locking and thus releases the clamping shaft (22), the upper rim apparatus (2) moves upwards and leaves the central opening of the TWA, or optionally, the lower rim apparatus (3) moves downwards and brings the TWA away from the upper rim apparatus (2) and the clamping shaft (22). And then a transportation means sends the TWA away. This procedure shall be achieved in a fast manner, thus it could save time in the disassemble procedure. In total, the whole procedure of assembly and disassembly shall be fast.

Measurement

In a preferred embodiment, the components participant in the rotation during a uniformity measurement comprises the cylinder body (21) of the upper rim apparatus (2), the frustoconical portion (31), the cylinder body (34) of the lower rim apparatus (3), the bearing (35) and the rotation axle (37). The components do not participant in the rotation comprises the upper supporting portion, the clamping shaft (22), the elastic element (33), the clamping unit (32) and the lower supporting portion. Thus compare to conventional chucking apparatus, the weight of components participating in the rotation in current invention shall be relatively light, and thus it will save the rotating energy.

In a preferred embodiment, a rotation motor (5) is coupled to the chucking apparatus (1). More specifically, the rotation motor (5) is linked with the rotation axle (37). During a measurement, the rotation motor (5) drives the rotation axle (37), and the latter further drives the cylinder body (34) of the lower rim apparatus (3). The cylinder body (34) further drives the frustoconical portion (31), the bearing (35), the TWA and the cylinder body (21) of the upper rim apparatus (2). A standing-by drum barrel shaft (4) is in contact with the tire of the TWA at the surface. By friction between said surfaces, the drum barrel shaft (4) correspondingly rotates with the tire.

In a preferred embodiment, a rotation motor (6) is coupled with a standing-by drum barrel shaft (4), the latter being in contact with the tire of the TWA at the surface. During a measurement, the rotation motor (6) drives the by drum barrel shaft (4), and the latter further drives the TWA by the friction between the surface of the tire and the surface of the drum barrel shaft (4). The rotation of the TWA further drives the cylinder body (21) of the upper rim apparatus (2), the frustoconical portion (31), the cylinder body (34) of the lower rim apparatus (3), the bearing (35) and the rotation axle (37) to rotate.

In a preferred embodiment, the measurement could be performed at both low speed mode and high speed mode. In another embodiment, the measure could be performed at high speed mode. Example 2 and 3 illustrate some possibilities of the measurement according to the current invention. It is however, shall be noted that example 2 and 3 do not restrict the scope of the measurement.

After the measurement, the rotation motor (5, 6) is stopped and the drum barrel shaft (4) is moved away from the TWA. The data is collected at the sensing unit and transported for further analysis.


**EXAMPLE**

A preferred embodiment of the present invention is presented below. It is however clear that other embodiments can easily be contemplated within the scope of the invention. The presentation below should thus not be construed restrictive, but it should be realized that the skilled person will easily apply modifications to the presented example without reappraisal of the appended claims.


**EXAMPLE 1**

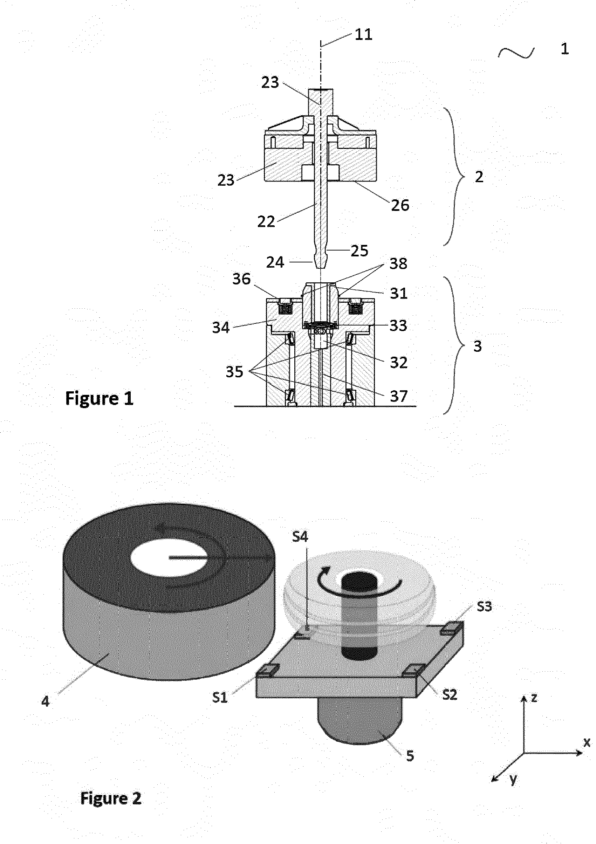

Fig. 1 shows one embodiment according to the present invention, the chucking apparatus (1) comprising: an upper rim apparatus (2), said upper rim apparatus comprising a central axis (11) and a clamping shaft (22) along said central axis (11).

The upper rim apparatus (2) is supported by an upper supporting portion (not shown in the figure). The clamping shaft (22) is integrated in the supporting portion at the junction (23). The upper rim apparatus (2) further comprises a cylinder body (21), wherein the surface (26) of the body designed for facing the TWA is flat. Said upper rim apparatus (2) moveable along the central axis (11) by a means, said means is in communication with the supporting portion.

The clamping shaft (22) comprises a cylinder body, a frustoconical end tip (24) and a narrowed neck (25) between the cylinder body and the frustoconical end tip (24). The diameter of the clamping shaft (22), more specifically the diameter of the cylinder body is smaller than the diameter of the central opening of the desired TWA. The frustoconical end tip (24) is suitable for an easy access to the corresponding part in the lower rim apparatus to receive the clamping shaft (22). The length of the clamping shaft (22) determines the width of the desired TWA for measurement. Thus for different types of TWA, a different clamping shaft (22) is desired.

The chucking apparatus (1) further comprises a lower rim apparatus (3), said lower rim apparatus comprising a frustoconical portion (31), a clamping unit (32) and a spring (33) between the frustoconical portion (31) and the clamping unit (32).

The lower rim apparatus (3) further comprises a T-shaped (in cross section view) cylinder body (34), wherein the diameter of the body is not homogeneous. The surface (36) of the body designed for facing the TWA is flat. The lower rim apparatus is supported by a lower supporting portion (partly shown in the figure), wherein two pairs of bearing (35) is mounted between the lower apparatus (3) and the lower supporting portion. The T-shaped cylinder body (34) is linked with a rotation axle (37) at the lower supporting portion. A plurality of sensors are mounted on the lower supporting portion to monitor the rotation performance of the TWA.

The frustoconical portion (31) is supported by said T-shaped cylinder body (34) in respect of the central axis (11). Said frustoconical portion (31) comprises a central opening, which is aligned with the central axis (11). Said central opening is suitable for the clamping shaft (22) to pass through. Said frustoconical portion (31) further comprises a cylinder body and a frustoconical end. The diameter of the cylinder body is bigger than the diameter of the central opening of the TWA, but smaller than the (largest) diameter of the T-shaped cylinder body (34). The surface of the frustoconical portion (31), which is facing the TWA, is flat. The frustoconical portion (31) further comprises two protrusions (38) orthogonal to the central axis on its surface, more specifically, on the surface of the cylinder body of the frustoconical portion (31). Correspondingly, the T-shaped cylinder body (34) comprises two cavities (not shown in the figure) to receive said protrusions (38), respectively. The combination of the protrusions (38) and cavities allows the frustoconical portion (31) to move along the central axis (11), but prevents a relative movement between the frustoconical portion (31) and the T-shaped cylinder body (34).

The clamping unit (32) comprises a housing and a plurality of bullets, wherein the housing is suitable to receive the end tip (24) of the clamping shaft (22). The narrowed neck (25) of the clamping shaft (22) is suitable to receive the bullets.

The spring (33) between the frustoconical portion (31) and the clamping unit (32) allows the frustoconical portion (31) to move towards and away from the upper rim apparatus. Eventually, it allows the frustoconical portion (31) to always be in contact with the lower surface of the TWA, such that certain benefits could be obtained, comprising, reducing the lateral force. The spring (33) comprises a central opening suitable to allow the clamping shaft passing through. The spring is a disc-spring 0MW2362-0060-30M.

When assembling, a TWA is delivered to the position of the chucking apparatus (1), more specifically, the central opening of the TWA is aligned with the central axis (11) of said chucking apparatus (1). The upper rim apparatus (2) moves downwards to the TWA and the lower rim apparatus. The clamping shaft (22) passes through the central opening of the TWA first, then the central opening of the frustoconical portion (31) and the central opening of the spring (33), and finally arrives at the clamping unit (32). More specifically, the end tip (24) arrives the housing in the clamping unit (32) and the narrowed neck (25) is at a corresponding position with the bullets in the clamping unit (32). The bullets apply a force towards the central axis (11) at the narrowed neck (25) and thus forms a rigid connection between the clamping unit (32) and the clamping shaft (22). This locking procedure is easy and fast, thus it saves the time for clamping.

When assembling, the upper rim apparatus (2) and the lower rim apparatus (3) clamps the TWA. More specifically, the surface (26) of the upper rim apparatus (2) and the surface (36) of the lower rim apparatus (3) clamp the TWA on the periphery of its surfaces. A force is applied from the upper rim apparatus (2) on the TWA thus it is tightly clamped. In modern manufacturing, the surfaces of the TWA that are being clamped is usually not flat. A sunken structure at the central part is expected. Thus there is a space between the central opening of the TWA and the surface (36) of the lower rim apparatus (3) that clamps the TWA. Said frustoconical portion (31) fulfills the space. Due to the spring (33), the frustoconical portion (31) could adjust based on the distance of between the surface (36) of the lower rim apparatus (3) and the central opening of the TWA along the central axis (11). Due to the spring (33), the frustoconical portion (31) could always be in contact with the lower surface of the TWA around the central opening with a force upwards. This adjusting procedure is done automatically, thus it provides extra control at the central part of the TWA and meanwhile saves time to do so.

To disassemble the TWA from the chucking apparatus (1) after the measurement, the bullets in the clamping unit (32) cancel the force towards the central axis (11) and thus releases the clamping shaft (22), the upper rim apparatus (2) moves upwards and leaves the central opening of the TWA, and then a transportation means sends the TWA away. This procedure is achieved in a fast manner, thus it saves time in the disassemble procedure. In total, the whole procedure of assembly and disassembly is fast.

During a uniformity measurement, the components participant in the rotation comprises the cylinder body (21) of the upper rim apparatus (2), the frustoconical portion (31), the T-shaped cylinder body (34) of the lower rim apparatus (3), the bearing (35) and the rotation axle (37). The components do not participant in the rotation comprises the upper supporting portion, the clamping shaft (22), the spring (33), the clamping unit (32) and the lower supporting portion. Thus compare to conventional chucking apparatus, the weight of components participating in the rotation in current invention is relatively light, and thus it will save the rotating energy.

## EXAMPLE 2

Fig. 2 shows one TWA measurement, according to an embodiment of the present application.

In a preferred embodiment, a rotation motor (5) is coupled to the chucking apparatus (1). More specifically, the rotation motor (5) is linked with the rotation axle (37). During a measurement, the rotation motor (5) drives the rotation axle (37), and the latter further drives the T-shaped cylinder body (34) of the lower rim apparatus (3). The T-shaped cylinder body (34) further drives the frustoconical portion (31), the bearing (35), the TWA and the cylinder body (21) of the upper rim apparatus (2). A standing-by drum barrel shaft (4) is in contact with the tire of the TWA at the surface. By friction between said surfaces, the drum barrel shaft (4) correspondingly rotates with the tire.

In this embodiment, four sensors (S1, S2, S3, S4) are mounted in the lower supporting portion that supports the lower rim apparatus (3), as shown in Fig. 2. The sensors are force sensors, and each sensor has three force components (channels): $F_x$, $F_y$, $F_z$. In this embodiment, the sensors are 3-component quartz force 9027 Kistler sensor. The force range for $F_x$, $F_y$, is -4 kN to 4 kN, and the force range for $F_z$ is -8 kN to 8 kN.

In this embodiment, the diameter of the drum barrel shaft (4) is 854 mm. In the above setup, two types of measurements could be performed. The first type is the solo "uniformity", and the second type is a combined "uniformity" and "plysteer & conicity". For each type of measurement, both low speed mode and high speed mode could be performed. In this setup, since the TWA is directly driven by the rotation motor (5), thus the rotation parameters of the motor (5) is the rotation parameters of the TWA. A detailed measurement specifications could be obtained in the following table.

Table 1 - measurement specifications according to Example 2 and Fig. 2

| | Uniformity | | Uniformity + Plysteer & Conicity (2 directions) | |
|---|---|---|---|---|
| | Standard (low speed) | High speed | Standard (low speed) | High speed |
| Motor angular speed | 60 RPM | 745.46 RPM | 60 RPM | 745.46 RPM |
| Motor linear speed | 9.66 km/h | 120 km/h | 9.66 km/h | 120 km/h |
| Revolutions | 5 CW | 10 CW | 3CW+3CCW | 10CW+10CCW |
| Samples per revolution | 1280 Pulses | | | |
| Sampling rate | 1280 Hz | 15,903.7 Hz | 1280 Hz | 15,903.7 Hz |
| Sampling duration | 5 s | 0.805 s | 6s | 1.610 s |
| channels | 12 channes: $F_x$, $F_y$, $F_z$ (S1, S2, S3, S4) | | | |
| Total sampling [samples/Ch] | 6,400 | 12,800 | 7,680 | 25,600 |
| Total sampling [samples] | 15,360 | 153,600 | 15,360 | 153,600 |

The data obtained from the force sensors (S1, S2, S3, S4) comprises 12 channels (3 channels for each sensor), by applying the following equations, the force at the central axis (11) could be obtained:

$$\sum F_x = (S_1 F_x) + (S_2 F_x) - (S_3 F_x) - (S_4 F_x)$$

$$\sum F_y = (S_1 F_y) + (S_2 F_y) - (S_3 F_y) - (S_4 F_y)$$

$$\sum F_z = (S_1 F_z) + (S_2 F_z) + (S_3 F_z) + (S_4 F_z)$$

wherein it is assumed that all sensors are equally distributed to the central axis.

**EXAMPLE 3**

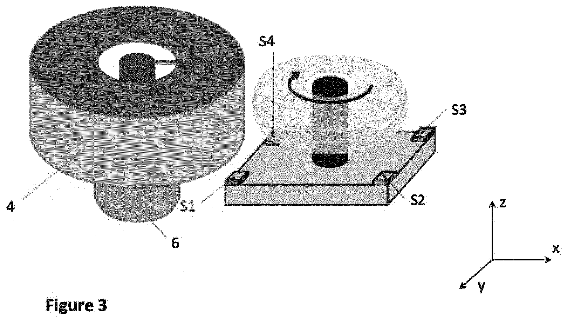

Fig. 3 shows one TWA measurement, according to an embodiment of the present application.

In a preferred embodiment, a rotation motor (6) is coupled with a standing-by drum barrel shaft (4), the latter being in contact with the tire of the TWA at the surface. During a measurement, the rotation motor (6) drives the by drum barrel shaft (4), the latter further drives the TWA by the friction between the surface of the tire and the surface of the drum barrel shaft (4). The rotation of the TWA further drives the cylinder body (21) of the upper rim apparatus (2), the frustoconical portion (31), the T-shaped cylinder body (34) of the lower rim apparatus (3), the bearing (35) and the rotation axle (37) to rotate.

In this embodiment, four sensors (S1, S2, S3, S4) are mounted in the lower supporting portion that supports the lower rim apparatus (3), as shown in Fig. 3. The sensors are force sensors, and each sensor has three force components (channels): $F_x$, $F_y$, $F_z$. In this embodiment, the sensors are 3-component quartz force 9027 Kistler sensor. The force range for $F_x$, $F_y$, is -4 kN to 4 kN, and the force range for $F_z$ is -8 kN to 8 kN.

In this embodiment, the diameter of the drum barrel shaft (4) is 854 mm. In the above setup, two types of measurements could be performed. The first type is the solo "uniformity", and the second type is a combined "uniformity" and "plysteer & conicity". For each type of measurement, a high speed mode is performed. Note that in this setup the rotation of the TWA is not directly driven by the rotation motor (6) but by the friction between the tire and the drum barrel shaft (4), thus a rotation ratio shall be considered. A detailed measurement specifications could be obtained in the following table.

Table 1 - measurement specifications according to Example 3 and Fig. 3

|  | Uniformity (High speed) | Uniformity + Plysteer & Conicity (2 directions) (High speed) |
| --- | --- | --- |
| Tire diameter range | 500 mm - 900 mm | |
| Tire radiu range | 250 mm - 450 mm | |
| Tire angular speed | 1273.24 RPM - 707.36 RPM | |
| Tire linear speed | 120 km/h | |
| Tire Revolutions | 10 CW | 10CW+10CCW |
| Samples per revolution | 1280 Pulses | |
| Sampling rate | 27,162.44 Hz - 15,090.24 Hz | |
| Sampling duration | 0.471 s - 0.848 s | 0.942 s - 1.696 s |
| Channels | 12 channes: $F_x$, $F_y$, $F_z$ (S1, S2, S3, S4) | |
| Total sampling [samples/Ch] | 12,800 | 25,600 |
| Total sampling [samples] | 153,600 | 153,600 |
| Driver shaft ratio | 0.581:1 - 1.054:1 | |
| Driver shaft angular speed | 745.45 RPM | |
| Driver shaft lineal speed | 120 km/h | |

Similarly to example 2, the data obtained from the force sensors (S1, S2, S3, S4) comprises 12 channels (3 channels for each sensor), by applying the following equations, the force at the central axis (11) could be obtained:

$$\sum F_x = (S_1 F_x) + (S_2 F_x) - (S_3 F_x) - (S_4 F_x)$$

$$\sum F_y = (S_1 F_y) + (S_2 F_y) - (S_3 F_y) - (S_4 F_y)$$

$$\sum F_z = (S_1 F_z) + (S_2 F_z) + (S_3 F_z) + (S_4 F_z)$$

wherein it is assumed that all sensors are equally distributed to the central axis.

Through the above description and the examples, the following advantages of the current invention could be concluded: i) it allows to adjust the space between the upper and lower rim based on the width of the TWA by changing a most suitable clamping shaft (22); ii) it saves rotation energy since only limited components participating in the rotation; iii) it provides a fast clamping and unclamping means to save the assembling time; iv) it provides a control to the central part of the TWA at its lower surface with the frustoconical portion (31), which brings benefits comprising reducing the lateral force.

**Claims**

1. A chucking apparatus (1) designed for chucking a TWA (tire wheel assembly) in a TWA uniformity machine, said chucking apparatus (1) comprising:

   - a lower rim apparatus (3);
   - an upper rim apparatus (2), said upper rim apparatus (2) comprising a central axis (11); said upper rim apparatus (2) moveable towards and away from said lower rim apparatus (3) along the central axis (11);
   - means in communication with said upper rim apparatus (2) for controlling the movement towards and away from said lower rim apparatus (3);

   said lower rim apparatus (3) comprising:

   - a frustoconical portion (31), wherein said frustoconical portion (31) is movable towards and away from said upper rim apparatus (2) along the central axis (11);
   - a clamping unit (32) suitable for receiving the end tip (24) of said clamping shaft (22);

   **characterized in that** said chucking apparatus further comprises a sensing unit mounted under said lower rim apparatus (3), said sensing unit comprising a force sensor; said upper rim apparatus comprises a clamping shaft (22) along said central axis (11); and said frustoconical portion (31) comprising a central opening corresponding to said clamping shaft (22) along the central axis (11).

2. A chucking apparatus (1) according to claim 1, wherein said lower rim apparatus (3) further comprises an elastic element (33) between said frustoconical portion (31) and said clamping unit (32).

3. A chucking apparatus (1) according to any of the claims 1 to 2, wherein said elastic element (33) is metallic, preferably a spring, more preferably a disc-spring.

4. A chucking apparatus (1) according to any of the claims 1 to 3, wherein said clamping unit (32) comprises a plurality of bullets, wherein the plurality of bullets are suitable for applying forces towards the central axis (11).

5. A chucking apparatus (1) according to any of the claims 1 to 4, wherein said clamping shaft (22) comprises a conical portion at the end tip and a narrowed neck after the conical portion, wherein the narrowed neck is suitable for receiving said bullets comprised in the clamping unit (32).

6. A chucking apparatus (1) according to any of the claims 1 to 5, wherein said frustoconical portion (31) comprises at least one protrusion on the outer surface, said protrusion is orthogonal to the central axis (11); wherein said lower rim apparatus (3) comprises corresponding cavity to receive said protrusion, wherein said protrusion is movable in said cavity along the central axis (11).

7. A chucking apparatus (1) according to any of the claims 1 to 6, wherein said sensing unit comprises a plurality of sensors, said sensor preferably has three force components.

8. A TWA uniformity machine, said TWA uniformity machine comprising:

   - said chucking apparatus (1) according to any of the claims 1 to 7;
   - a supporting base designed for supporting said lower rim apparatus (3);
   - a transporting system designed for transporting the TWA to said chucking apparatus (1);
   - a standing-by drum barrel shaft (4) designed for assisting the TWA uniformity measurement;
   - a rotation motor (5) coupled to the chucking apparatus (1) or to the drum barrel shaft (4).

9. A TWA uniformity machine according to claim 8, wherein said TWA uniformity machine further comprises at least one bearing between said chucking apparatus (1) and said supporting base.

10. A method for assembling a TWA on a TWA uniformity machine, comprising the following steps:

    - a TWA is transported to the TWA uniformity machine according to any of the claims 8 to 9, said TWA comprising a central opening, said central opening synchronized with the central axis (11) of the chucking apparatus (1);

said TWA comprises an upper surface and a lower surface;
- the upper rim apparatus (2) is moved towards the lower rim apparatus (3) by a means;
- the clamping shaft (22) passes through the central opening of the TWA and the central opening of the frustoconical portion (31), arriving at the clamping unit (32);
- the upper rim apparatus (2) and the lower rim apparatus (3) clamp the TWA on its upper and lower surface by a force;
- the frustoconical portion (31) is in contact with the lower surface of the TWA around its central opening;
- the bullets move towards the central axis (11) at the neck of said clamping shaft (22) and apply a force to the clamping shaft (22).

11. A method to perform a TWA uniformity measurement, comprising the following steps:

- assemble a TWA on a TWA uniformity machine according to claim 10;
- set the standing-by drum barrel shaft (4) in contact with the surface of the TWA;
- control the rotation motor (5) coupled to the chucking apparatus (1) in respect of a measuring course; wherein the TWA rotates driven by the rotation motor (5), and correspondingly, the drum barrel shaft (4) rotates by the friction at the surface in contact with the TWA;
- stop the rotation motor (5) and collect data from the sensing unit.

12. A method to perform a TWA uniformity measurement according to claim 11, wherein said measuring course comprises a low speed measuring and a high speed measuring, wherein the motor lineal speed is set at preferably 9.66 km/h in the low speed measuring, and 120 km/h at the high speed measuring.

13. A method to perform a TWA uniformity measurement, comprising the following steps:

- assemble a TWA on a TWA uniformity machine according to claim 10;
- set the standing-by drum barrel shaft (4) in contact with the surface of the TWA;
- control the rotation motor (5) coupled to the drum barrel shaft (4) in respect of a measuring course; wherein drum barrel shaft (4) rotates driven by the motor, and correspondingly, the TWA rotates by the friction at the surface in contact with the drum barrel shaft (4);
- stop the rotation motor (5) and collect data from the sensing unit.

14. A method to perform a TWA uniformity measurement according to claim 13, wherein said measuring course comprises a high speed measuring, wherein the motor lineal speed is set at preferably 120 km/h.

15. A method to perform a TWA uniformity measurement according to any of the claims 11 to 14, wherein during the measurement, the clamping shaft (22), the elastic element (33) and the clamping unit (32) do not rotate, wherein the upper rim apparatus (2), the lower rim apparatus (3) and the bearing rotate.

**Patentansprüche**

1. Spannvorrichtung (1), dafür gestaltet, eine TWA (Reifenradanordnung) in eine TWA-Gleichförmigkeitsmaschine zu spannen, wobei die Spannvorrichtung (1) Folgendes umfasst:

- eine untere Felgenvorrichtung (3),
- eine obere Felgenvorrichtung (2), wobei die obere Felgenvorrichtung (2) eine Mittelachse (11) umfasst, die obere Felgenvorrichtung (2) entlang der Mittelachse (11) hin zu und weg von der unteren Felgenvorrichtung (3) beweglich ist,
- Mittel in Verbindung mit der oberen Felgenvorrichtung (2) zum Steuern der Bewegung hin zu und weg von der unteren Felgenvorrichtung (3),

wobei die untere Felgenvorrichtung (3) Folgendes umfasst:

- einen kegelstumpfförmigen Abschnitt (31), wobei der kegelstumpfförmige Abschnitt (31) entlang der Mittelachse (11) hin zu und weg von der oberen Felgenvorrichtung (2) beweglich ist,
- eine Klemmeinheit (32), die geeignet ist, die Endspitze (34) der Klemmwelle (22) aufzunehmen,

**dadurch gekennzeichnet, dass** die Spannvorrichtung ferner eine Abtasteinheit umfasst, die unter der unteren Felgenvorrichtung (3) montiert ist, wobei die Abtasteinheit einen Kraftsensor umfasst, die obere Felgenvorrichtung entlang der Mittelachse (11) eine Klemmwelle (22) umfasst und der kegelstumpfförmige Abschnitt (31) eine Mittelöffnung entlang der Mittelachse (11) umfasst, die der Klemmwelle (22) entspricht.

2. Spannvorrichtung (1) nach Anspruch 1, wobei die untere Felgenvorrichtung (3) ferner ein elastisches Element (33) zwischen dem kegelstumpfförmigen Abschnitt (31) und der Klemmeinheit (32) umfasst.

3. Spannvorrichtung (1) nach einem der Ansprüche 1 bis 2, wobei das elastische Element (33) metallisch ist, vorzugsweise eine Feder, bevorzugter eine Tellerfeder.

4. Spannvorrichtung (1) nach einem der Ansprüche 1 bis 3, wobei die Klemmeinheit (32) mehrere Kugeln umfasst, wobei die mehreren Kugeln geeignet sind, Kräfte hin zur Mittelachse (11) auszuüben.

5. Spannvorrichtung (1) nach einem der Ansprüche 1 bis 4, wobei die Klemmwelle (22) einen kegelförmigen Abschnitt an der Endspitze und nach dem kegelförmigen Abschnitt einen verengten Hals umfasst, wobei der verengte Hals geeignet ist, die Kugeln aufzunehmen, welche die Klemmeinheit (32) umfasst.

6. Spannvorrichtung (1) nach einem der Ansprüche 1 bis 5, wobei der kegelstumpfförmige Abschnitt (31) mindestens einen Vorsprung auf der Außenfläche umfasst, wobei der Vorsprung rechtwinklig zur Mittelachse (11) ist, wobei die untere Felgenvorrichtung (3) einen entsprechenden Hohlraum zur Aufnahme des Vorsprungs umfasst, wobei der Vorsprung in dem Hohlraum entlang der Mittelachse (11) beweglich ist.

7. Spannvorrichtung (1) nach einem der Ansprüche 1 bis 6, wobei die Abtasteinheit mehrere Sensoren umfasst, wobei der Sensor vorzugsweise drei Kraftkomponenten aufweist.

8. TWA-Gleichförmigkeitsmaschine, wobei die TWA-Gleichförmigkeitsmaschine Folgendes umfasst:

   - die Spannvorrichtung (1) nach einem der Ansprüche 1 bis 7,
   - eine Stützbasis, die dafür gestaltet ist, die untere Felgenvorrichtung (3) zu stützen,
   - ein Transportsystem, das dafür gestaltet ist, die TWA zu der Spannvorrichtung (1) zu transportieren,
   - eine in Betriebsbereitschaft befindliche Trommelwelle (4), die dafür gestaltet ist, die TWA-Gleichförmigkeitsmessung zu unterstützen,
   - einen Drehmotor (5), der mit der Spannvorrichtung (1) oder der Trommelwelle (4) gekoppelt ist.

9. TWA-Gleichförmigkeitsmaschine nach Anspruch 8, wobei die TWA-Gleichförmigkeitsmaschine ferner mindestens ein Lager zwischen der Spannvorrichtung (1) und der Stützbasis umfasst.

10. Verfahren zum Montieren einer TWA auf einer TWA-Gleichförmigkeitsmaschine, die folgenden Schritte umfassend:

   - eine TWA wird zu der TWA-Gleichförmigkeitsmaschine nach einem der Ansprüche 8 bis 9 transportiert, wobei die TWA eine Mittelöffnung umfasst, die Mittelöffnung mit der Mittelachse (11) der Spannvorrichtung (1) synchronisiert ist, die TWA einen Oberseite und eine Unterseite umfasst,
   - die obere Felgenvorrichtung (2) wird durch ein Mittel hin zu der unteren Felgenvorrichtung (3) bewegt,
   - die Klemmwelle (22) verläuft durch die Mittelöffnung der TWA und die Mittelöffnung des kegelstumpfförmigen Abschnitts (31) und erreicht die Klemmeinheit (32),
   - die obere Felgenvorrichtung (2) und die untere Felgenvorrichtung (3) klemmen die TWA auf ihrer Ober- und Unterseite durch eine Kraft fest,
   - der kegelstumpfförmige Abschnitt (31) steht rings um seine Mittelöffnung in Kontakt mit der Unterseite des TWA, die Kugeln bewegen sich am Hals der Klemmwelle (22) hin zu der Mittelachse (11) und üben eine Kraft auf die Klemmwelle (22) aus.

11. Verfahren zum Durchführen einer TWA-Gleichförmigkeitsmessung, die folgenden Schritte umfassend:

   - Montieren einer TWA auf eine TWA-Gleichförmigkeitsmaschine nach Anspruch 10,
   - In-Kontakt-Bringen der in Betriebsbereitschaft befindlichen Trommelwelle (4) mit der Oberfläche der TWA,
   - Steuern des Drehmotors (5), der mit der Spannvorrichtung (1) gekoppelt ist, in Bezug auf einen Messungsablauf, wobei sich die Trommelwelle (4) angetrieben von dem Drehmotor (5) dreht und sich dementsprechend die Trommelwelle (4) durch die Reibung an der Oberfläche in Kontakt mit der TWA dreht,
- Anhalten des Drehmotors (5) und Erfassen von Daten von der Abtasteinheit.

12. Verfahren zum Durchführen einer TWA-Gleichförmigkeitsmessung nach Anspruch 11, wobei der Messungsablauf eine Messung bei niedriger Geschwindigkeit und eine Messung bei hoher Geschwindigkeit umfasst, wobei die lineare Geschwindigkeit des Motors für die Messung bei niedriger Geschwindigkeit vorzugsweise auf 9,66 km/h eingestellt wird und für die Messung bei hoher Geschwindigkeit auf 120 km/h.

13. Verfahren zum Durchführen einer TWA-Gleichförmigkeitsmessung, die folgenden Schritte umfassend:

- Montieren einer TWA auf einer TWA-Gleichförmigkeitsmaschine nach Anspruch 10,
- In-Kontakt-Bringen der in Betriebsbereitschaft befindlichen Trommelwelle (4) mit der Oberfläche der TWA,
- Steuern des Drehmotors (5), der mit der Trommelwelle (4) gekoppelt ist, in Bezug auf einen Messungsablauf, wobei sich die Trommelwelle (4) angetrieben von dem Motor dreht und sich dementsprechend die TWA durch die Reibung an der Oberfläche in Kontakt mit der Trommelwelle (4) dreht,
- Anhalten des Drehmotors (5) und Erfassen von Daten von der Abtasteinheit.

14. Verfahren zum Durchführen einer TWA-Gleichförmigkeitsmessung nach Anspruch 13, wobei der Messungsablauf eine Messung bei hoher Geschwindigkeit umfasst, wobei die lineare Geschwindigkeit des Motors vorzugsweise auf 120 km/h eingestellt wird.

15. Verfahren zum Durchführen einer TWA-Gleichförmigkeitsmessung nach einem der Ansprüche 11 bis 14, wobei sich die Klemmwelle (22), das elastische Element (33) und die Klemmeinheit (32) während der Messung nicht drehen, wobei sich die obere Felgenvorrichtung (2), die untere Felgenvorrichtung (3) und das Lager drehen.


**Revendications**

1. Appareil de tournage (1) conçu pour le tournage d'un TWA (ensemble pneu roue) dans une machine de test d'uniformité de TWA, ledit appareil de tournage (1) comprenant :

- un appareil de bord inférieur (3) ;
- un appareil de bord supérieur (2), ledit appareil de bord supérieur (2) comprenant un axe central (11) ; ledit appareil de bord supérieur (2) pouvant être rapproché et éloigné dudit appareil de bord inférieur (3) le long de l'axe central (11) ;
- un moyen en communication avec ledit appareil de bord supérieur (2) pour commander le mouvement vers et à l'opposé dudit appareil de bord inférieur (3) ;

ledit appareil de bord inférieur (3) comprenant :

- une partie tronconique (31), dans lequel ladite partie tronconique (31) peut être rapprochée et éloignée dudit appareil de bord supérieur (2) le long de l'axe central (11) ;
- une unité de serrage (32) appropriée pour recevoir la pointe d'extrémité (24) dudit arbre de serrage (22) ;

**caractérisé en ce que** ledit appareil de tournage comprend en outre une unité de détection montée sous ledit appareil de bord inférieur (3), ladite unité de détection comprenant un capteur de force ; ledit appareil de bord supérieur comprend un arbre de serrage (22) le long dudit axe central (11) ; et ladite partie tronconique (31) comprenant une ouverture centrale correspondant audit arbre de serrage (22) le long de l'axe central (11).

2. Appareil de tournage (1) selon la revendication 1, dans lequel ledit appareil de bord inférieur (3) comprend en outre un élément élastique (33) entre ladite partie tronconique (31) et ladite unité de serrage (32).

3. Appareil de tournage (1) selon l'une quelconque des revendications 1 à 2, dans lequel ledit élément élastique (33) est métallique, de préférence un ressort, de manière davantage préférée un ressort à disque.

4. Appareil de tournage (1) selon l'une quelconque des revendications 1 à 3, dans lequel ladite unité de serrage (32) comprend une pluralité de balles, dans lequel la pluralité de balles sont appropriées pour appliquer des forces vers l'axe central (11).

5. Appareil de tournage (1) selon l'une quelconque des revendications 1 à 4, dans lequel ledit arbre de serrage (22) comprend une partie conique au niveau de la pointe d'extrémité et un col rétréci après la partie conique, dans lequel le col rétréci est approprié pour recevoir lesdites balles comprises dans l'unité de serrage (32).

6. Appareil de tournage (1) selon l'une quelconque des revendications 1 à 5, dans lequel ladite partie tronconique (31) comprend au moins une saillie sur la surface extérieure, ladite saillie est orthogonale à l'axe central (11) ; dans lequel ledit appareil de bord inférieur (3) comprend une cavité correspondante pour recevoir ladite saillie, dans lequel ladite saillie peut être déplacée dans ladite cavité le long de l'axe central (11).

7. Appareil de tournage (1) selon l'une quelconque des revendications 1 à 6, dans lequel ladite unité de détection comprend une pluralité de capteurs, ledit capteur a de préférence trois composantes de force.

8. Machine de test d'uniformité de TWA, ladite machine de test d'uniformité de TWA comprenant :

   - ledit appareil de tournage (1) selon l'une quelconque des revendications 1 à 7 ;
   - une base de support conçue pour supporter ledit appareil de bord inférieur (3) ;
   - un système de transport conçu pour transporter le TWA jusqu'audit appareil de tournage (1) ;
   - un arbre de cylindre de tambour (4) se tenant à proximité conçu pour assister la mesure de l'uniformité du TWA ;
   - un moteur de rotation (5) couplé à l'appareil de tournage (1) ou à l'arbre de cylindre de tambour (4).

9. Machine de test d'uniformité de TWA selon la revendication 8, dans laquelle ladite machine de test d'uniformité de TWA comprend en outre au moins un palier entre ledit appareil de tournage (1) et ladite base de support.

10. Procédé d'assemblage d'un TWA sur une machine de test d'uniformité de TWA, comprenant les étapes suivantes :

    - un TWA est transporté jusqu'à la machine de test d'uniformité de TWA selon l'une quelconque des revendications 8 à 9, ledit TWA comprenant une ouverture centrale, ladite ouverture centrale synchronisée avec l'axe central (11) de l'appareil de tournage (1) ; ledit TWA comprend une surface supérieure et une surface inférieure ;
    - l'appareil de bord supérieur (2) est rapproché de l'appareil de bord inférieur (3) par un moyen ;
    - l'arbre de serrage (22) passe à travers l'ouverture centrale du TWA et l'ouverture centrale de la partie tronconique (31), arrivant au niveau de l'unité de serrage (32) ;
    - l'appareil de bord supérieur (2) et l'appareil de bord inférieur (3) serrent le TWA sur sa surface supérieure et inférieure par une force ;
    - la partie tronconique (31) est en contact avec la surface inférieure du TWA autour de son ouverture centrale ;
    - les balles se rapprochent de l'axe central (11) au niveau du col dudit arbre de serrage (22) et appliquent une force sur l'arbre de serrage (22).

11. Procédé pour effectuer une mesure d'uniformité de TWA, comprenant les étapes suivantes :

    - assembler un TWA sur une machine de test d'uniformité de TWA selon la revendication 10 ;
    - disposer l'arbre de cylindre de tambour (4) se tenant à proximité en contact avec la surface du TWA ;
    - commander le moteur de rotation (5) couplé à l'appareil de tournage (1) par rapport à un parcours de mesure ; dans lequel le TWA tourne entraîné par le moteur de rotation (5), et de manière correspondante, l'arbre de cylindre de tambour (4) tourne par le frottement au niveau de la surface en contact avec le TWA ;
    - arrêter le moteur de rotation (5) et collecter des données à partir de l'unité de détection.

12. Procédé pour effectuer une mesure d'uniformité de TWA selon la revendication 11, dans lequel ledit parcours de mesure comprend une mesure à faible vitesse et une mesure à vitesse élevée, dans lequel la vitesse linéaire du moteur est réglée de préférence à 9,66 km/h dans la mesure à faible vitesse, et 120 km/h au niveau de la mesure à vitesse élevée.

13. Procédé pour effectuer une mesure d'uniformité de TWA, comprenant les étapes suivantes :

    - assembler un TWA sur une machine de test d'uniformité de TWA selon la revendication 10 ;
    - disposer l'arbre de cylindre de tambour (4) se tenant à proximité en contact avec la surface du TWA ;
    - commander le moteur de rotation (5) couplé à l'arbre de cylindre de tambour (4) par rapport à un parcours de mesure ; dans lequel l'arbre de cylindre de tambour (4) tourne entraîné par le moteur, et de manière correspondante, le TWA tourne par le frottement au niveau de la surface en contact avec l'arbre de cylindre de tambour (4) ;
- arrêter le moteur de rotation (5) et collecter des données à partir de l'unité de détection.

**14.** Procédé pour effectuer une mesure d'uniformité de TWA selon la revendication 13, dans lequel ledit parcours de mesure comprend une mesure à vitesse élevée, dans lequel la vitesse linéaire du moteur est réglée de préférence à 120 km/h.

**15.** Procédé pour effectuer une mesure d'uniformité de TWA selon l'une quelconque des revendications 11 à 14, dans lequel pendant la mesure, l'arbre de serrage (22), l'élément élastique (33) et l'unité de serrage (32) ne tournent pas, dans lequel l'appareil de bord supérieur (2), l'appareil de bord inférieur (3) et le palier tournent.

**Figure 1**

**Figure 2**

**Figure 3**

**EP 3 798 604 B1**

## REFERENCES CITED IN THE DESCRIPTION

**Patent documents cited in the description**

- EP 3418708 A
- US 2018128704 A

- US 5719331 A